# EUROPEAN PATENT SPECIFICATION

(11) **EP 1 963 120 B1**
(45) Date of publication and mention of the grant of the patent: **21.11.2012**
(21) Application number: 05854877.7
(22) Date of filing: 20.12.2005
(51) Int. Cl.: B60H 1/32

(54) **OUTSIDE AIRFLOW CIRCULATION TO COOL CONDENSER FOR INTEGRATED TRANSPORT REFRIGERATION UNIT**
AUSSENLUFTZIRKULATION ZUM KÜHLEN EINES KONDENSATORS FÜR EINE INTEGRIERTE TRANSPORTKÜHLEINHEIT
CIRCULATION D'AIR EXTERIEUR POUR REFROIDISSEMENT DE CONDENSEUR POUR GROUPE FRIGORIFIQUE DE TRANSPORT INTEGRE

(43) Date of publication of application: 03.09.2008
(73) Proprietor: Carrier Corporation, Farmington, CT 06034-4015 (US)
(72) Inventor: MICHEL, Veronique, F-76240 Bonsecours (FR); FERREIRA, Joaquim, F-76410 Freneuse (FR); SAUDOYEZ, Claude, F-76750 Vieux Manoir (FR)
(74) Representative: Hull, James Edward
(86) International application number: PCT/US2005/046232
(87) International publication number: WO 2007/073369

(56) References cited:
- EP-A2- 0 210 403
- WO-A-99/14066
- WO-A1-00/65288
- DE-U- 7 245 034
- DE-U1- 20 205 384
- GB-A- 1 170 138
- JP-A- 2002 356 111
- US-A- 3 528 607
- US-A- 4 641 502
- US-A- 4 905 478
- US-A- 5 005 372
- US-A- 5 081 912
- US-A- 5 184 474
- US-A- 5 605 055
- US-A1- 2003 079 487
- US-B1- 6 295 826
- US-B1- 6 339 934
- US-B1- 6 361 428
- US-B1- 6 745 586
- US-B2- 6 742 343

## Description

### BACKGROUND OF THE INVENTION

The preferred embodiment of the present invention relates to a transport refrigeration unit including a condenser located within a vehicle. More particularly, the preferred embodiment relates to an apparatus and method for providing external airflow to a transport refrigeration unit having the condenser located in the vehicle.

Conventional transport refrigeration units provide cooling inside a vehicle compartment. The conventional transport refrigeration units are typically located on a vehicle roof within a refrigeration unit housing. The transport refrigeration unit cools air that is pumped into the vehicle compartment to provide cooling.

The condenser produces heat, and vents within the refrigeration unit housing to allow external airflow to reach the refrigeration unit components to manage the heat created by the condenser during operation. The vehicle roof acts as an insulator to protect the vehicle interior from the heat produced by the condenser.

Locating the refrigeration unit housing on the vehicle roof is unsightly. It would be desirable to locate the refrigeration unit within the vehicle compartment to hide the refrigeration unit components from external view. However, heat from the condenser and other components is emptied into the vehicle compartment, counteracting with the cooled air pumped into the vehicle compartment from the refrigeration unit. Additionally, external air must be able to reach the refrigeration unit components within the vehicle to provide cooling.

Therefore, an arrangement and a method for locating refrigeration unit components in a vehicle while providing external air to the refrigeration unit components is needed.

A prior art refrigeration unit, having the features of the preamble of claim 1 is shown in US-2003/0079487.

### SUMMARY OF THE INVENTION

According to the present invention, there is provided a refrigeration unit as claimed in claim 1 and a method as claimed in claim 8.

In the preferred embodiment of the present invention a vehicle roof supports a refrigeration unit. The refrigeration unit includes an external housing located primarily outside of the vehicle compartment and an internal housing located primarily inside of a vehicle compartment. External air enters the refrigeration unit through a first opening located between the vehicle roof and the external housing and exits through a second opening in the external housing. The external air is heated by a condenser and a compressor and exits the refrigeration unit through a second opening in the external housing. The heated air does not enter the vehicle compartment, allowing the refrigeration unit components to be located within the vehicle compartment without heating the vehicle compartment. A fan is located proximate to the second opening to control the airflow through the refrigeration unit.

The internal housing may assist in insulating the components of the refrigeration unit from the interior of the vehicle. The external housing and a cover located at the second opening reduce the amount of water and other external contaminants that enter the refrigeration unit. A gasket may be located between the refrigeration unit and the vehicle roof for further sealing.

The external housing, the fan, and the cover may be assembled prior to assembly on the vehicle roof. Likewise, the internal housing, the condenser, the compressor, and an evaporator may be assembled together prior to assembly with the vehicle roof providing for easier handling and removal if any maintenance is required.

These and other features of the present invention can be best understood from the following specification and drawings, the following of which is a brief description.

### BRIEF DESCRIPTION OF THE DRAWINGS

Figure 1 is a schematic view of a vapor compression system of the present invention;
Figure 2 shows a perspective view of a refrigeration unit of the present invention;
Figure 3 illustrates a schematic side view from within the refrigeration unit; and
Figure 4 is a perspective view of the components within an internal housing.

### DETAILED DESCRIPTION OF THE PREFERRED EMBODIMENT

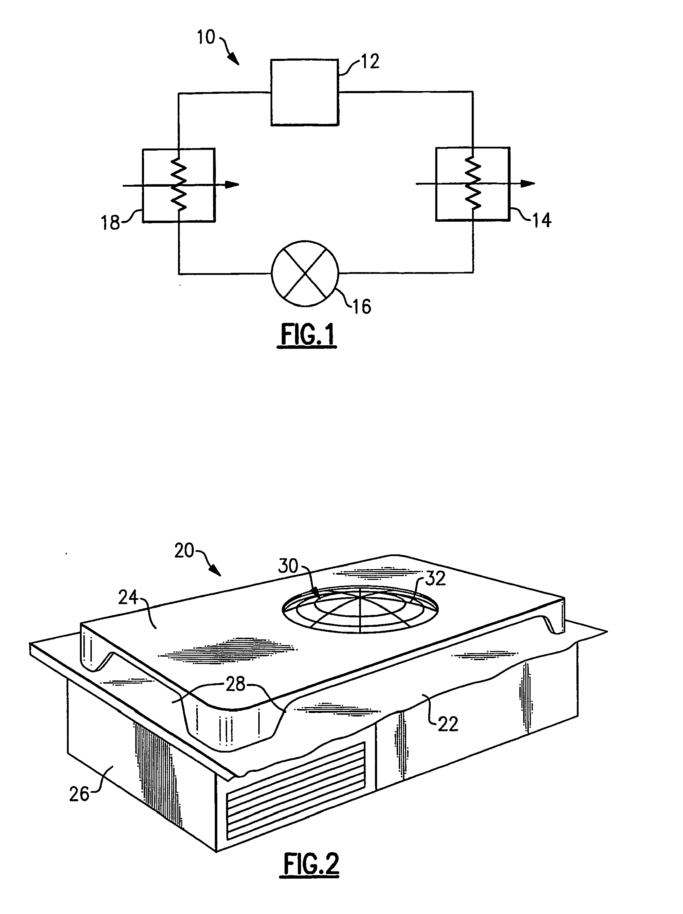

Figure 1 illustrates a vapor compression system 10, such as a refrigeration system, including a compressor 12 that compresses a fluid, such as refrigerant. From the compressor 12, the refrigerant is delivered downstream to a heat exchanger, such as a condenser 14. In the condenser 14, the refrigerant rejects heat to an external fluid medium. In the embodiment shown, the external fluid medium is air. From the condenser 14, the refrigerant travels to an expansion device 16 and is expanded to a low pressure. The refrigerant accepts heat from another fluid medium, such as air, in an evaporator 18 and then flows to the compressor 12, completing the cycle.
Figure 2 shows a perspective view of a refrigeration unit 20 of the present invention including the vapor compression system 10. A vehicle roof 22 supports the refrigeration unit 20. The refrigeration unit 20 includes an external housing 24 and an internal housing 26. The external housing 24 is located primarily outside of the vehicle roof 22. The internal housing 26 is located primarily inside of a vehicle compartment 21 and under the vehicle roof 22, as shown. External air enters the external housing 24 through a first opening 28 located between the vehicle roof 22 and the external housing 24. As shown, the refrigeration unit 20 can include multiple first openings 28 to increase the airflow into the refrigeration unit 20. The air passes over the components of the refrigeration unit 20, such as the condenser 14 and the compressor 12 and is heated. The now heated air exits through a second opening 30 in the external housing 24. A cover 32 may be located at the second opening 30 to reduce the amount of water and other external contaminants that may enter the refrigeration unit 20 through the second opening 30. Additionally, the external housing 24 also assists in preventing water and other external contaminants from entering the refrigeration unit 20.

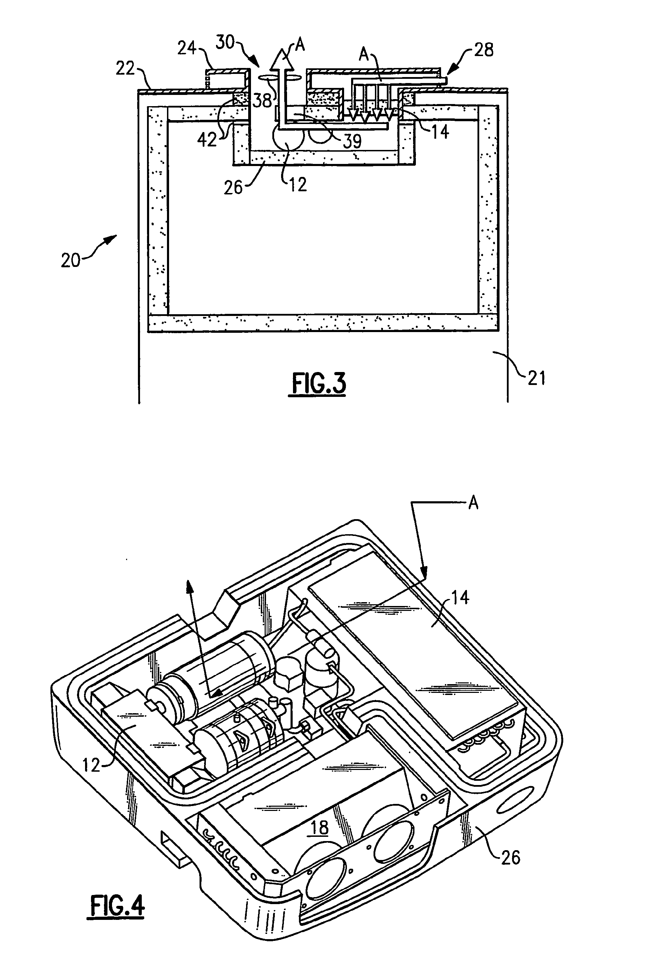

Figure 3 illustrates a schematic side view of the refrigeration unit 20. External air, illustrated by arrows A, enters the refrigeration unit 20 through the first opening 28. The external air flows past the components of the refrigeration unit 20. Specifically, the air accepts heat from the refrigerant in the condenser 14 and passes over the compressor 12 prior to exiting the refrigeration unit 20 through the second opening 30. The refrigerant cooled by the condenser 14 is expanded in the expansion device 16 and flows into an evaporator 18, where the refrigerant cools air to be sent into the vehicle compartment. The outside air accepts heat from both the condenser 14 and the compressor 12, removing heat from the compressor 12 as a result of operation. The heated air exits the refrigeration unit 20 through the second opening 30 and flows outside the vehicle.

A fan 38 located proximate to the second opening 30 controls the airflow through the refrigeration unit 20. The revolutions per minute of the fan 38 may be increased or decreased to adjust the airflow through the second opening 30. A sensor 39 located within the refrigeration unit 20 measures the temperature and adjusts the fan 38 accordingly. As the sensor 39 senses a rise in the temperature of the air exiting the refrigeration unit 20, the fan 38 is adjusted to a higher speed. Likewise, when the sensor 39 senses a drop in the temperature of the air exiting the refrigeration unit 20, the fan 38 is adjusted to a lower speed.

The condenser 14 is located proximate to the first opening 28 and in the airflow path of the refrigeration unit 20. Both the condenser 14 and the compressor 12 are primarily located within the internal housing 26 under the vehicle roof 22. Additionally, the evaporator 18 may also be located within the internal housing 26, as shown in Figure 4. However, the evaporator 18 need not be located within the airflow path through the refrigeration unit 20. The internal housing 26 assists in insulating the components of the refrigeration unit 20 from the interior of the vehicle. Gaskets 42 may be located between the refrigeration unit 20 and the vehicle roof 22 for further sealing.

The external housing 24, the cover 32, and the fan 38 may be assembled together prior to assembly on the vehicle roof 22. Likewise, the internal housing 26, the condenser 14, the compressor 12, and the evaporator 18 may be assembled together prior to assembly with the vehicle roof 22. Thus, assisting assembly onto the vehicle roof 22 and providing for easier handling and removal if any maintenance is required.

By discharging air outside of the vehicle compartment 21 to remove heat from the components, the refrigeration unit 20 can be located within the vehicle compartment 21 and under the vehicle roof 22, and is therefore less unsightly. The refrigeration unit 20 is hidden from external view, the heat generated is removed through the second opening 30 without affecting the temperature of the air in the vehicle compartment 21.

## Claims

1. A vehicle compartment (21) comprising a refrigeration unit (20), the refrigeration unit (20) comprising:
an internal housing (26) that houses a plurality of components (12,14) located primarily inside the vehicle compartment (21);
an external housing (24) located primarily outside the vehicle compartment (21);
a first opening (28) to allow air outside the vehicle compartment (21) to flow into the internal housing (26) and accept heat from said plurality of components (12,14); and
a second opening (30) to allow the air to exit the internal housing (26), **characterised in that**:
the second opening (30) is defined by the external housing (24); and
the first opening is between the external housing and the vehicle compartment.

2. The vehicle compartment (21) of claim 1, wherein the external housing (24) and a roof (22) of the vehicle compartment (21) define the first opening (28).

3. The vehicle compartment (21) of claim 1, further including a fan (38) located proximate to the second opening (30) to control the air from the internal housing (26).

4. The vehicle compartment (21) of claim 1, wherein the plurality of components (12,14) include a compressor (12) and a condenser (14) of a vapor compression system (10), and the air accepts heat from the plurality of components (12,14).

5. The vehicle compartment (21) of claim 4, wherein the condenser (14) is located proximate the first opening (28).

6. The vehicle compartment (21) of claim 4, wherein the vapor compression system (10) includes an evaporator (18) and an expansion device (16).

7. The vehicle compartment (21) of claim 1, wherein a cover (32) is located proximate to the second opening (30).

8. A method of cooling a vehicle compartment (21) having a device according to any of claims 1-7 comprising the steps of:
flowing air through a first opening (28) located between an external housing (24) and a vehicle roof (22);
directing the air over at least one component (12,14) located within an internal housing (26) located within the compartment (21);
heating the air with the at least one component (12,14); and
flowing the air through a second opening (30) in the external housing (24) to exit the internal housing (26).

9. The method of claim 8, further comprising the step of controlling the air with a fan (38) located adjacent the second opening (30).

10. The method of claim 8, wherein the step of directing the air includes accepting heat from the at least one component (12,14), and the at least one component comprises a condenser (14) and a compressor (12).

## Patentansprüche

1. Fahrzeuginnenraum (21), aufweisend eine Kühleinheit (20), wobei die Kühleinheit (20) aufweist:
ein inneres Gehäuse (26), in dem eine Mehrzahl von Komponenten (12, 14) angeordnet ist und das sich hauptsächlich innerhalb des Fahrzeuginnenraums (21) befindet;
ein äußeres Gehäuse (24), das sich hauptsächlich außerhalb des Fahrzeuginnenraums (21) befindet;
eine erste Öffnung (28), die ermöglicht, dass Luft von außerhalb des Fahrzeuginnenraums (21) in das innere Gehäuse (26) strömt und Wärme von der Mehrzahl der Komponenten aufnimmt; und
eine zweite Öffnung (30), die ermöglicht, dass Luft aus dem inneren Gehäuse (26) austritt,
**dadurch gekennzeichnet, dass**
die zweite Öffnung (30) durch das äußere Gehäuse (24) definiert ist; und
sich die erste Öffnung zwischen dem äußeren Gehäuse und dem Fahrzeuginnenraum befindet.

2. Fahrzeuginnenraum (21) nach Anspruch 1, wobei das äußere Gehäuse (24) und ein Dach (22) des Fahrzeuginnenraums (21) die erste Öffnung (28) definieren.

3. Fahrzeuginnenraum (21) nach Anspruch 1, ferner aufweisend einen Ventilator (28), der sich in der Nähe der zweiten Öffnung (30) befindet, um die Luft aus dem inneren Gehäuse (26) zu steuern.

4. Fahrzeuginnenraum (21) nach Anspruch 1, wobei die Mehrzahl von Komponenten (12, 14) einen Verdichter (12) und einen Kondensator (14) eines Dampfverdichtungssystems (10) aufweist und die Luft Wärme von der Mehrzahl von Komponenten (12, 14) aufnimmt.

5. Fahrzeuginnenraum (21) nach Anspruch 4, wobei sich der Kondensator (14) in der Nähe der ersten Öffnung (28) befindet.

6. Fahrzeuginnenraum (21) nach Anspruch 4, wobei das Dampfverdichtungssystem (10) einen Verdampfer (18) und eine Expansionsvorrichtung (16) aufweist.

7. Fahrzeuginnenraum (21) nach Anspruch 1, wobei sich eine Abdeckung (32) in der Nähe der zweiten Öffnung (30) befindet.

8. Verfahren zum Kühlen eines Fahrzeuginnenraums (21) mit einer Vorrichtung nach einem der Ansprüche 1-7, wobei das Verfahren folgende Schritte aufweist:
Strömen Lassen von Luft durch eine erste Öffnung (28), die sich zwischen einem äußeren Gehäuse (24) und einem Fahrzeugdach (22) befindet;
Leiten der Luft über mindestens eine Komponente (12, 14), die in einem inneren Gehäuse (26) angeordnet ist, das sich in dem Innenraum (21) befindet;
Erwärmen der Luft mit der mindestens einen Komponente (12, 14); und Strömen Lassen der Luft durch eine zweite Öffnung (30) in dem äußeren Gehäuse (24) derart, dass sie aus dem inneren Gehäuse (26) austritt.

9. Verfahren nach Anspruch 8, ferner aufweisend den Schritt des Steuerns der Luft mit einem Ventilator (38), der der zweiten Öffnung (30) benachbart angeordnet ist.

10. Verfahren nach Anspruch 8, wobei der Schritt des Leitens der Luft das Aufnehmen von Wärme von der mindestens einen Komponente (12, 14) umfasst und die mindestens eine Komponente einen Kondensator (14) und einen Verdichter (12) aufweist.

## Revendications

1. Compartiment de véhicule (21) comprenant un groupe frigorifique (20), le groupe frigorifique (20) comprenant :
un boîtier interne (26) qui reçoit une pluralité de composants (12, 14) situés principalement à l'intérieur du compartiment de véhicule (21) ;
un boîtier externe (24) situé principalement à l'extérieur du compartiment de véhicule (21) ;
une première ouverture (28) pour permettre à l'air à l'extérieur du compartiment de véhicule (21) de s'écouler à l'intérieur du boîtier interne (26) et
d'accepter la chaleur provenant de ladite pluralité de composants (12, 14) ; et
une deuxième ouverture (30) pour permettre à l'air de sortir du boîtier interne (26),
**caractérisé en ce que** :
la deuxième ouverture (30) est définie par le boîtier externe (24) ; et
la première ouverture est entre le boîtier externe et le compartiment de véhicule.

2. Compartiment de véhicule (21) selon la revendication 1, dans lequel le boîtier externe (24) et un toit (22) du compartiment de véhicule (21) définissent la première ouverture (28).

3. Compartiment de véhicule (21) selon la revendication 1, comportant en outre un ventilateur (38) situé à proximité de la deuxième ouverture (30) pour réguler l'air provenant du boîtier interne (26).

4. Compartiment de véhicule (21) selon la revendication 1, dans lequel la pluralité de composants (12, 14) comportent un compresseur (12) et un condenseur (14) d'un système de compression de vapeur (10), et l'air accepte de la chaleur provenant de la pluralité de composants (12, 14).

5. Compartiment de véhicule (21) selon la revendication 4, dans lequel le condenseur (14) est situé à proximité de la première ouverture (28).

6. Compartiment de véhicule (21) selon la revendication 4, dans lequel le système de compression de vapeur (10) comporte un évaporateur (18) et un dispositif d'expansion (16).

7. Compartiment de véhicule (21) selon la revendication 1, dans lequel un couvercle (32) est situé à proximité de la deuxième ouverture (30).

8. Procédé de refroidissement d'un compartiment de véhicule (21) ayant un dispositif selon l'une quelconque des revendications 1 à 7, comprenant les étapes suivantes :
faire s'écouler de l'air à travers une première ouverture (28) située entre un boîtier externe (24) et un toit de véhicule (22) ;
diriger l'air par-dessus au moins un composant (12, 14) situé à l'intérieur d'un boîtier interne (26) situé à l'intérieur du compartiment (21) ;
faire chauffer l'air avec l'au moins un composant (12, 14) ; et
faire s'écouler l'air à travers une deuxième ouverture (30) dans le boîtier externe (24) pour le faire sortir du boîtier interne (26).

9. Procédé selon la revendication 8, comprenant en outre l'étape de réguler l'air avec un ventilateur (38) situé en position adjacente à la deuxième ouverture (30).

10. Procédé selon la revendication 8, dans lequel l'étape consistant à diriger l'air inclut la réception de chaleur depuis l'au moins un composant (12, 14) et l'au moins un composant comprend un condenseur (14) et un compresseur (12).
